# EUROPÄISCHE PATENTSCHRIFT

(11) **EP 1 748 201 B1**
(45) Veröffentlichungstag und Bekanntmachung des Hinweises auf die Patenterteilung: **29.12.2010**
(21) Anmeldenummer: 06405312.7
(22) Anmeldetag: 18.07.2006
(51) Int. Cl.: F16C 33/10, B01F 13/08, B01F 7/16

(54) **Magnetrührer**
Magnetic stirrer
Mélangeur magnétique

(30) Priorität: 29.07.2005 CH 13032005
(43) Veröffentlichungstag der Anmeldung: 31.01.2007
(60) Teilanmeldung: 10003314.1
(73) Patentinhaber: Zeta Biopharma GmbH, 8144 Tobelbad (AT)
(72) Erfinder: Meier, Hans Peter, 8855 Wangen/Nuolen (CH)
(74) Vertreter: Becker, Thomas

(56) Entgegenhaltungen:
- US-A- 5 061 079
- US-A1- 2005 002 274

## Beschreibung

### ERFINDUNGSBEREICH

Die Erfindung betrifft einen Magnetrührer für Fluide, insbesondere zum Rühren von sterilen Flüssigkeiten, gemäss dem Oberbegriff des Patentanspruchs 1.

### HINTERGRUND DER ERFINDUNG

Aus der Verfahrenstechnik, insbesondere der Biotechnologie, der pharmazeutischen Industrie und der Lebensmittelindustrie sind mechanisch gerührte Reaktoren bekannt.

Das Dokument US 5061079 offenbart einen Rührer gemäss dem Oberbegriff des Anspruchs 1.

### ZUSAMMENFASSUNG DER ERFINDUNG

Aufgabe der Erfindung ist es, einen Rührer zu schaffen, der die Nachteile der bekannten Vorrichtungen nicht aufweist. Diese Aufgabe wird durch einen Rührer gemäss Anspruch 1 gelöst.

Der Rührkopf des neuen Rührers umfasst Mittel zur hydrodynamischen Erzeugung eines Fluidfilms aus dem zu rührenden Medium zur zumindest teilweisen Aufnahme der beim Rühren entstehenden Kräfte. Die Vorteile liegen in der einfachen Bauart, im annähernd verschleissfreien Betrieb und der massiven Steigerung der maximal möglichen Drehzahl des Rührkopfes.

### KURZBESCHREIBUNG DER ZEICHNUNGEN

Bevorzugte Ausführungsformen des erfindungsgemässen Rührers werden nachstehend anhand der Zeichnungen beschrieben. Es zeigen :
- Fig. 1a: einen Rührer gemäss einer ersten Ausführungsform teilweise im Längsschnitt im ein- gebauten Zustand in einem Reaktorgefäss;
- Fig. 1b: eine Detailvergrösserung im Bereich der Lagerscheiben des Rührers gemäss Figur 1 a im Stillstand;
- Fig. 1c: die Detailvergrösserung gemäss Figur 1b im Betrieb;
- Fig. 2: eine Explosionsansicht des Lagers und der Mittel zur Entlastung des Lagers gemäss Figur 1 im Längsschnitt;
- Fig. 3a: eine Sicht von unten auf eine Rotorscheibe mit V-Nuten;
- Fig. 3b: eine Sicht von unten auf eine Rotorscheibe mit Spiral-Nuten;
- Fig. 4a: eine Sicht von unten auf eine Rotorscheibe mit T-Nuten;
- Fig. 4b: eine Sicht von unten auf eine Rotorscheibe mit U-Nuten;
- Fig. 4c: eine Sicht von unten auf eine Rotorscheibe mit Tannenbaum-Nuten;
- Fig. 5: ein Reaktorgefäss für Bakterienkulturen mit einem Rührer mit Untenantrieb und einer zusätzlichen oberen Lagerung im teilweisen Längsschnitt, wobei eine seitliche Schikane gezeichnet ist, die auf der Welle anbringbaren Rührorgane aber weggelassen sind;
- Fig. 6: ein Rotor-Stator-Rührwerk gemäss der Erfindung im teilweisen Längsschnitt;
- Fig. 7a: ein teilweiser Längsschnitt durch ein Lager und der Mittel zur Entlastung des Lagers gemäss einer weiteren Ausführungsform der Erfindung im Ruhezustand;
- Fig. 7b: die Ansicht nach Fig. 7a bei laufendem Rührer; und
- Fig. 8: einen Rührer gemäss einer weiteren Ausführungsform teilweise im Längsschnitt im eingebauten Zustand in einem Einweggebinde.

### DETAILLIERTE BESCHREIBUNG DER DARSTELLUNGEN

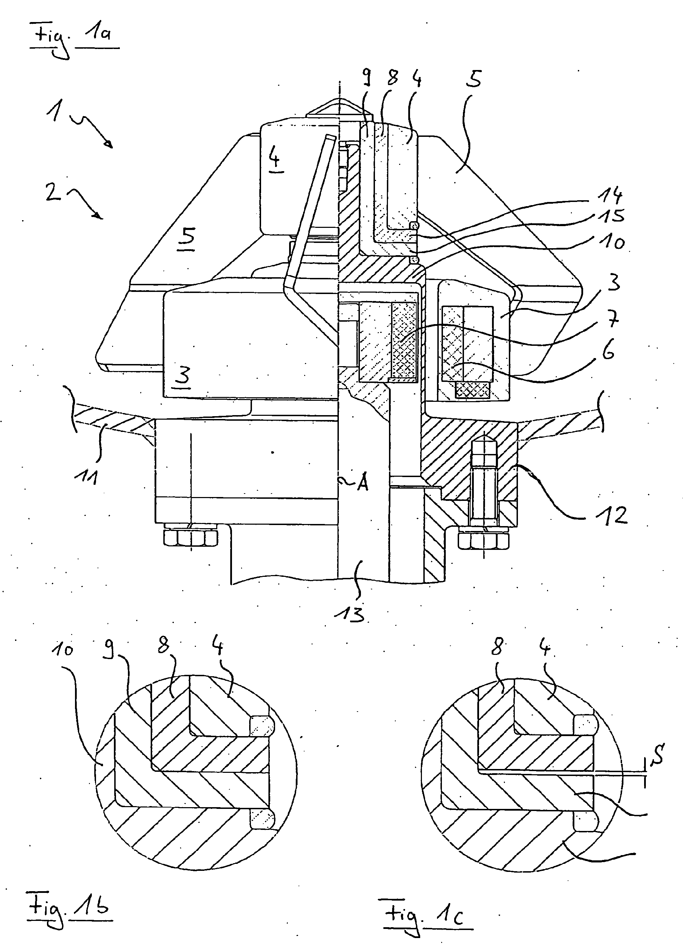

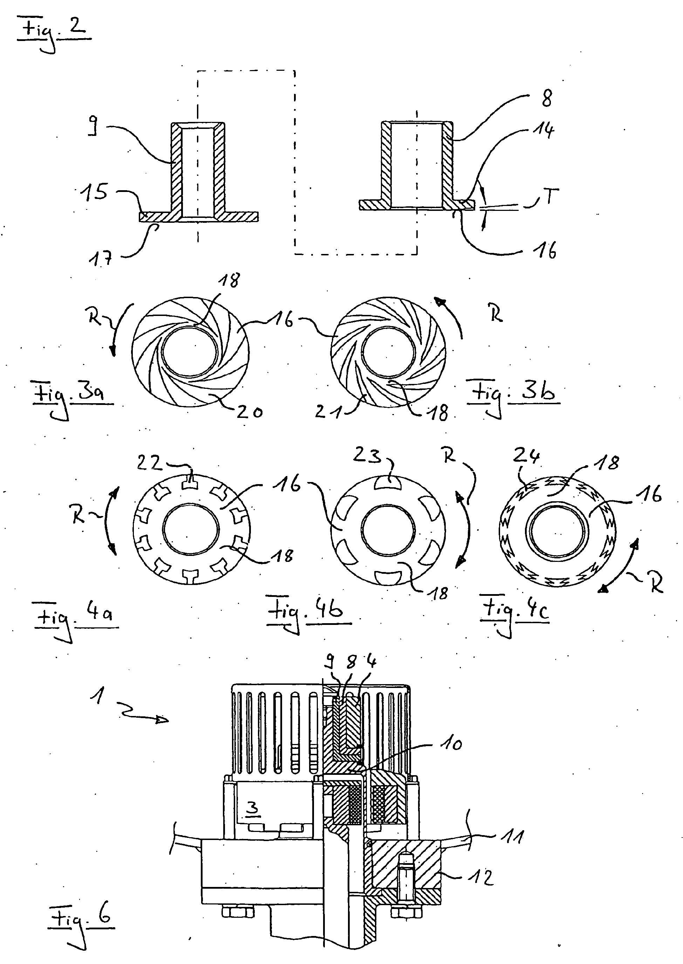

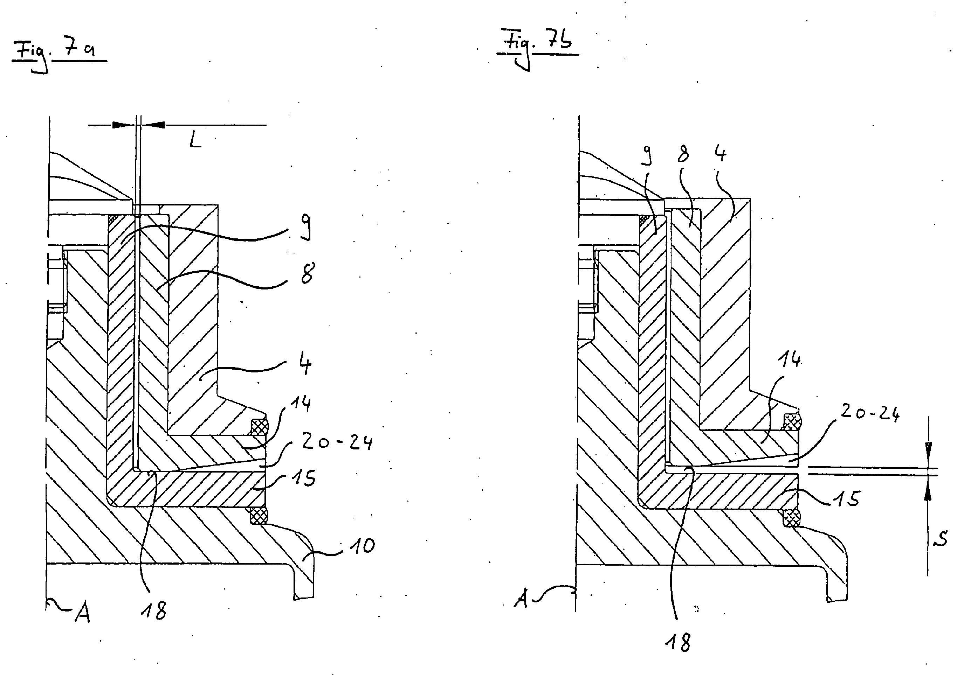

Ein Rührer 1 gemäss Figur 1a basiert auf einem Impeller zum Abbau von Temperatur- und Konzentrationsgradienten in wässrigen Lösungen. Ein Rührkopf 2 umfasst zwei koaxial zueinander angeordnete Ringe 3 und 4, die über Rührorgane 5 miteinander verbunden sind. In einem unteren Treibring 3 ist ein magnetischer Aussenläufer 6 angeordnet. In einem oberen Lagerring 4 ist im Rührkopf (2) eine Lagerschale 8 eingesetzt. Mit der Lagerschale 8 ist der Rührkopf 2 auf einen oberen feststehenden Lagerzapfen 9 eines Spalttopfes 10 gesteckt. Vorzugsweise ist das Lager ein Keramik-Gleitlager. Die zylindrischen, axial ausgerichteten Anteile von Lagerschale 8 und Lagerzapfen 9 wirken in bekannter Weise zusammen um die radiale und die axiale Bewegung des Rührkopfes zu gewährleisten. Neu an dem Lager ist, dass Lagerschale 8 und Lagerzapfen 9 am unteren Ende jeweils mit koaxial und koplanar angeordneten Scheiben 14, 15 versehen sind, die vertikal zur Lagerachse A stehen. Die untere Scheibe ist als stationäre Gegenscheibe 15 ausgebildet und die obere Scheibe ist als Rotorscheibe 14 radial und axial beweglich ausgebildet. Eine Unterseite 16 der Rotorscheibe 14 ist mit hydrodynamisch wirksamen Strukturen, vorzugsweise Mikronuten, versehen. Einige schematische Beispiele von vorteilhaften Formen und Anordnungen von Mikronuten 20-24 auf der Unterseite 16 der Rotorscheiben 14 sind in den Figuren 3 und 4 dargestellt. Bei Drehung in Richtung R wird die zu rührende Flüssigkeit in die Nuten 20-24 geschaufelt und aufgestaut. Oberhalb einer Übergangsdrehzahl wird der Flüssigkeitsdruck zwischen der Rotorscheibe 14 und der Gegenscheibe 15 so hoch, dass die Rotorscheibe 14 und mit Ihr der ganze Rührkopf 2 in axialer Richtung angehoben wird, wie es in der Figur 1c dargestellt ist. Allgemein gilt, dass sich die Höhe des dabei entstehenden Spaltes S zwischen Rotorscheibe 14 und Gegenscheibe 15 selbsttätig in Abhängigkeit von den spaltöffnenden Kräften und den spaltschliessenden Kräften einstellt. Die Spalthöhe ist hauptsächlich abhängig von Anzahl und Geometrie der Nuten, vom Gewicht des Rührers und der daran angebrachten Rührorgane, von der Drehzahl mit der gerührt wird und vom zu rührenden Medium. Das gezeigte Ausführungsbeispiel der Figur 7 hebt sich zum Beispiel je nach Drehzahl 0.05 bis 1 mm ab.

Aus den Figuren 1 b und 1c geht hervor, dass sich die Nuten über die gesamte Unterseite 16 der Rotorscheibe erstrecken, so dass im Betrieb Flüssigkeit in den Raum zwischen Lagerschale 8 und Lagerzapfen 9 gefördert wird und dieses Axiallager zusätzlich stabilisiert wird.

In den Figuren 7a bis 7b ist eine weitere Ausführungsform der Erfindung gezeigt bei der sich im Unterschied zu der Ausführungsform gemäss Fig. 1 die Nuten nicht über die gesamte Fläche der Unterseite 16 erstrecken. Im Zentrum bleibt dadurch ein umlaufender Steg 18 stehen, der im Ruhezustand auf der Oberseite 17 der Gegenscheibe aufliegt. Bei der dargestellten Ausführungsform nimmt die Höhe der Nut nach innen hin ab. Der Neigungswinkel oder Tilt T liegt im dargestellten Beispiel bei 7°, wobei die Gestaltung und Anordnung der Nuten vereinfacht dargestellt ist. Der Tilt liegt vorzugsweise im Bereich von 0.1 bis 10° und der innere Steg 18 ist zwischen 1 und 10 mm breit.

Um der Ausdehnung der Materialien bei unterschiedlichen Temperaturen Rechnung zu tragen, ist die Lagerpaarung, respektive sind die Werkstoffe sind so gewählt, dass ein Spiel L von 0,02 bis 0,5 mm - abhängig vom Durchmesser und der Büchsenlänge - ausgebildet ist.

Die Unterseite der Rotorscheibe kann als Wavy Face gestaltet sein, wie es zum Beispiel von gasgeschmierten Gleitringdichtungen der Firma Flowserve, Irving, TX, USA bekannt ist.

Anstelle des zylindrischen Gleitlagers und der vertikal dazu angeordneten Rotor- und Gegenscheiben kann insbesondere für kleinere und leichtere Rührköpfe auch ein kegelstumpfförmiges Lager eingesetzt werden, bei dem die axial und die radial wirkenden Kräfte von nur zwei Oberflächen erzeugt und aufgenommen werden. Die Mittel zur hydrodynamischen Erzeugung des Fluidfilms unterscheiden sich dabei nicht wesentlich von den oben beschriebenen.

Unterhalb der Übergangsdrehzahl bricht der Flüssigkeitsfilm und damit der Spalt S zusammen und die Rotorscheibe 14 gleitet mit ihrer Unterseite 16 wieder direkt auf einer Oberseite 17 der Gegenscheibe 15 wodurch die Reibung ansteigt. In der Praxis ist dies nur beim Anfahren und Abstellen des Rührers relevant, ansonsten wird eine Betriebsdrehzahl oberhalb der Übergangsdrehzahl gewählt. Die Übergangsdrehzahl hängt auch vom zu rührenden Medium ab, wobei hochviskose Flüssigkeiten die Übergangsdrehzahl senken und niedrigviskose sie steigern.

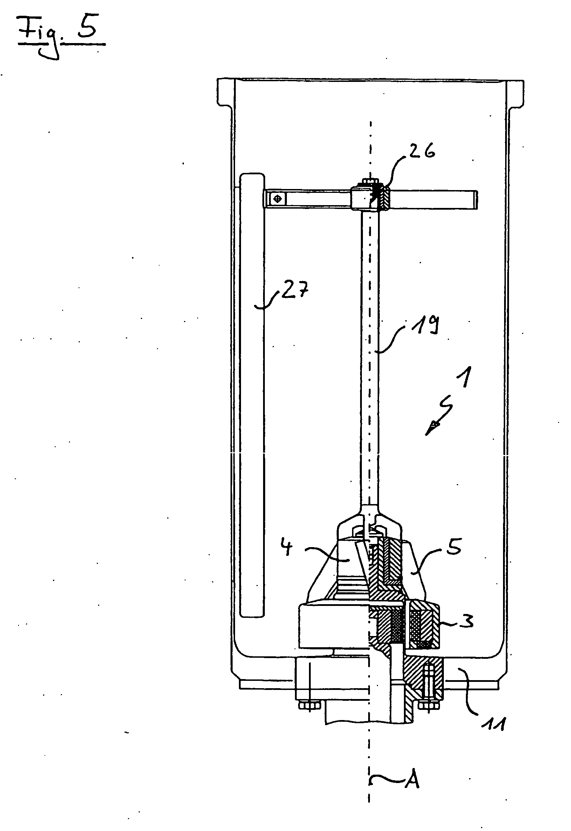

In der Figur 2 sind in einer Explosionsansicht im Längsschnitt das Lager 8, 9 und die Mittel 14, 15 dargestellt, die zur Entlastung des Lagers und zur Aufnahme der axialen Kräfte dienen. Im dargestellten Beispiel sind Lagerschale 8 und Rotorscheibe 14 und entsprechend Lagerzapfen 9 und Gegenscheibe 15 jeweils einstückig hergestellt. Da gemäss dieser Ausführungsform die Rotorscheibe 14 und die Gegenscheibe 15 aus denselben hochwertigen Materialien wie die Lager hergestellt sind, stellt die Reibung beim Anfahren und Abstellen des Rührers kein Problem dar. Sobald die Drehzahl des Rührers zur hydrodynamischen Erzeugung des Fluidfilms aus dem zu rührenden Medium ausreicht, trennt dieser die beiden Flächen 16, 17 gegen die Gewichtskraft des Rührkopfes 2 und gegen die beim Rühren entstehenden axial nach unten gerichteten Kräfte. Ein Rührkopf, wie er in der Figur 5 skizziert ist, trägt je nach Einsatzbereich mehrere auf der Welle 19 übereinander angeordnete Rührorgane und kann bis zu 50 kg wiegen. Um ein seitliches Verkippen zu vermeiden müssen diese Rührer bisher mit einem oberen Lager 26 stabilisiert werden. Die obere Lagerung löst jedoch das Gewichtsproblem nicht, da der Rührkopf weiterhin mit dem vollen Gewicht auf dem Spalttopf aufliegt. Die vorliegende Erfindung erlaubt es hier besonders vorteilhaft das Lager zu entlasten und den unerwünschten Abrieb zu minimieren.

Bevorzugte Materialien zur Herstellung von Lagerschale, Rotorscheibe, Lagerzapfen und Gegenscheibe sind Siliziumkarbid (SiC), Zirkondioxid (ZrO₂). Aluminiumoxid (Al₂O₃), Polyetheretherketon (PEEK). Polyvinylidenfluorid (PVDF), Teflon^{®} (Hochleistungskunststoffe Perfluoralkoxy-Copolymer (PFA) und Polytetrafluorethylen (PTFE)), Teflon^{®} mit Glas- oder Kohlefaser, Kohlenstoff oder Graphit.

Vorzugsweise sind Rotorscheibe und Gegenscheibe, respektive Lagerschale und Lagerzapfen nicht aus dem gleichen Material gefertigt, um die Neigung zum Anfressen zu minimieren. Eine bevorzugte Materialkombination ist SiC und ZrO₂.

In den Ausführungsbeispielen gemäss den Figuren sind Lagerschale/Rotorscheibe und Lagerzapfen/Gegenscheibe jeweils einstückig dargestellt, da die gezeigten Produkte für die Anwendung in der Steriltechnik ausgelegt sind. für Anwendungen, bei denen nicht steril gearbeitet werden muss, kommen auch zweistückige Lagerschale/Rotorscheibe und Lagerzapfen/Gegenscheibe in Betracht.

Während die hydrodynamisch wirksamen V-Nuten 20 und Spiral-Nuten 21 aus den Figuren 3a und 3b nur in eine Drehrichtung R den gewünschten Druck erzeugen, lassen die Nutformen T-Nut 22, U-Nut 23 und Tannenbaum-Nut 24 beide Drehrichtungen zu. Diese bidirektionale Wirksamkeit geht allerdings auf Kosten der Wirksamkeit, da Sie einen geringeren hydrodynamischen Druck erzeugen.

Dadurch, dass die Belastung des Lagers entscheidend gesenkt wird, können die erfindungsgemässen Rührer mit wesentlich höheren Drehzahlen betrieben werden, als dies mit bekannten Magnetrührwerken möglich war. Neu sind daher Rotor-Stator-Rührwerke realisierbar, die mit bis zu 3000 µ/min betrieben werden. In der Figur 6 ist ein solches Rührwerk zum Dispergieren gezeigt, mit dem sich die gewünschte hohe Peripheriegeschwindigkeit realisieren lässt.

In der Figur 1 ist der Behälterboden 11, in den ein basaler Flansch 12 des Spalttopfes 10 eingeschweisst ist, nur angedeutet. Es handelt sich bei dem dargestellten Beispiel um ein Bodenmagnetrührwerk, wie es zum Beispiel in Bioreaktoren zum Einsatz kommt. Vom Antrieb sind nur der treibende Magnet, das heisst ein Innenläufer 7, und die oberen Anteile einer Antriebswelle 13, auf der der Innenläufer 7 sitzt, dargestellt. Der Aussenläufer ist vorzugsweise im Treibring gekapselt und kommt nicht mit den zu rührenden Flüssigkeiten in Kontakt. Gemäss der vorliegenden Erfindung, jedoch nicht in den Figuren dargestellt, umfassen die Mittel zur hydrodynamischen Erzeugung des Fluidfilms einen als Gegenscheibe ausgebildeten Bereich der Oberseite des Flansches und einen als Rotorscheibe ausgebildeten Bereich der Unterseite des Treibringes. Im Ruhezustand liegt der Treibring mit seinem, die hydrodynamisch aktiven Mittel tragenden, Anteil auf dem als Gegenscheibe ausgebildeten Bereich des Flansches auf. Bei Drehung des Rührkopfes bildet sich wiederum ein Fluidfilm zwischen Rotorscheibe und Gegenscheibe aus und der Rührkopf wird angehoben. Die räumliche Trennung von Lager und Mitteln zum hydrodynamischen erzeugen des Fluidfilms führt zu einer wesentlich gesteigerten Gestaltungsfreiheit. Die wirksamen Flächen von Rotor- und Gegenscheibe und deren Durchmesser können stark vergrössert werden, so dass selbst grosse und sehr schwere Rührorgane problemlos angehoben und im Betrieb stabilisiert werden können. Das eigentliche Lager eines solchen Rührers muss ein entsprechendes axiales Spiel aufweisen, wobei auf die radialen Anteile 14, 15 wie sie in den Figuren dargestellt sind vollkommen verzichtet werden kann. Der als Gegenscheibe bezeichnete Bereich des Flansches oder des Behälterbodens ist in weiteren vorteilhaften Ausführungsformen vorzugsweise in radialer Richtung unterbrochen, um eine gute Zirkulation des zu rührenden Mediums zu gewährleisten. Diese Unterbrüche lassen einfachere Nutformen zu, da das Fluid nicht mehr von der Peripherie zum Zentrum hin gefördert werden muss, sondern im Bereich der Unterbrüche über die gesamte Breite der Rotorscheibe in die Nuten geschaufelt werden kann.

In weiteren Ausführungsformen sind die erfindungsgemässen Rührer für den Einbau in Einweggebinde optimiert. Rührer und Spalttopf sind vorzugsweise aus Kunststoff gefertigt, so dass sie sich zusammen mit dem Einweggebinde nach einmaligem Gebrauch problemlos entsorgen lassen.

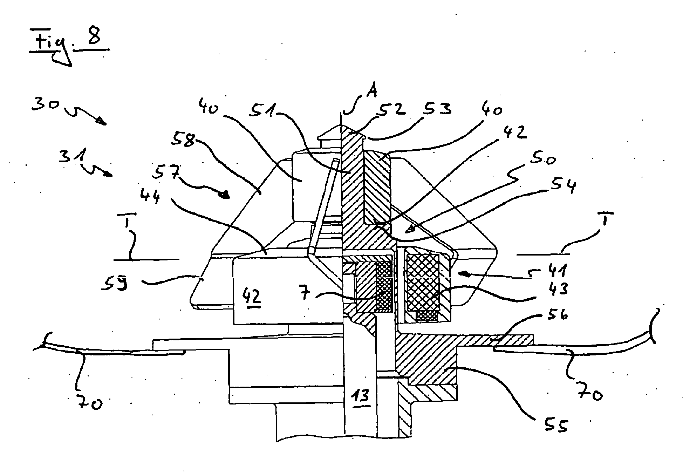

In der Figur 8 ist ein Ausführungsbeispiel eines Rührers 30 dargestellt, der in ein Einweggebinde 70 eingebaut ist. Ein Spalttopf 50 aus Kunststoff umfasst einen basalen Flansch 12', der zur Verbindung mit einer unteren Gebindewand 70 mit einem radialen Flansch 56 versehen ist. Die Gebindewand 70 ist vorzugsweise mit dem Flansch 56 verklebt oder verschweisst, oder mittels geeigneter Mittel verflanscht oder verklemmt. Die Gebindewand 70 kann auch direkt am basalen Flansch 55 oder am Spalttopf 50 befestigt sein, wobei in allen Fällen eine dichte Verbindung gewährleistet sein muss.

Zur Aufnahme der Antriebswelle 13 mit dem Innenläufer 7, weist der Spalttopf 50 wiederum einen entsprechenden Aufnahmeraum auf, so dass der Innenläufer 7 und ein entsprechender Aussenläufer 43 in eine koplanare Lage gebracht werden können um die Kraft vom Innenläufer radial in den Aussenläufer einkoppeln zu können.

Im dargestellten Ausführungsbeispiel ist der Aussenläufer 6 komplett im Treibring 41 aus Kunststoff verkapselt und anstelle der vorbeschriebenen separaten Lagerschale und Lagerring wirken entsprechend ausgebildete Bereiche eines Lagerrings 40 mit einem axialen Lagerzapfen 51 des Spalttopfes zusammen. Zu den Merkmalen, die den Lift-off Effekt erzeugen muss nichts mehr ausgeführt werden, da sich die oben offenbarte technische Lehre vom Fachmann auf die Versionen aus Kunststoff für Einweggebinde übertragen lässt. Vorzugsweise sind die Rührköpfe 31 und die Spalttöpfe 50 so konstruiert, dass sie sich in Spritzgusstechnisch fertigen lassen. Gemäss einer Ausführungsform lässt sich dabei eine Trennebene durch den Rührkopf 31 legen, so dass dieser in zwei Teile unterteilt ist, die sich problemlos aus einer Spritzgussform entformen lassen. In der Figur 8 ist eine solche Trennebene E angedeutet, die so gelegt ist, dass der Treibring 41 in einen unteren Anteil 42 mit einem Aufnahmeraum für den Aussenläufer 43 und einen oberen Deckel 44 unterteilt ist. Der Deckel 44 ist vorzugsweise zumindest an einem der Rührorgane 57 angeformt, damit zum Zusammenbau nur zwei Kunststoffbauteile gehandhabt werden müssen. Nach dem Spritzen kann der Aussenläufer 43 , der einen oder mehrere einzelne Magnete mit entsprechender Polung umfassen kann, in den Aufnahmeraum gelegt werden und ein herstellungstechnisch komplizierteres Umspritzen des oder der Magnete in der Form entfällt. Nach dem der Aussenläufer 43 in den unteren Anteil 42 des Treibringes 41 eingelegt ist, wird der obere Anteil 44 aufgesetzt beide Teile werden miteinander verbunden.

In einer weiteren Ausführungsformen ist der Deckel 44 nicht mit den Rührorganen, sondern über ein Scharnier mit dem Unterteil 42 verbunden, so dass er nach einlegen der Magnete zum Zusammenbau nur noch um das Scharnier geschwenkt werden muss. Deckel und Unterteil können jeweils im geschlossenen Zustand zum Beispiel miteinander verschweisst, verklebt oder durch geeignete Mittel verklemmt, verflanscht oder verschraubt werden. Die Rührorgane 57 des Ausführungsbeispiels der Figur 8 lassen sich nicht hinterschneidungsfrei spritzen und weisen daher bei dieser Fertigungsart vorzugsweise ebenfalls einen oberen 58 und einen unteren Anteil 59 auf, die vorzugsweise annähernd im Bereich der Trennebene zum Beispiel über, nicht in der Zeichnung dargestellte, männliche und weibliche Teile einer Steckverbindung miteinander verbindbar sind. Um die Spritzgussfertigung zu vereinfachen kann der Rührkopf 31 auch wesentlich einfacher gestaltet werden. Die Rührorgane 57 können zum Beispiel direkt am Deckel 44 angreifen, der das Drehmoment von Unterteil und Aussenläufer 43 auf die Rührorgane überträgt.

Aus Sterilitätsgründen ist es erwünscht, dass der Innenraum der Einweggebinde nach der Herstellung nicht mehr zugänglich ist. Idealerweise werden die Gebinde nach der Herstellung im geschlossenen Zustand und platzsparend zusammengefaltet gelagert und/oder zu ihrem Einsatzort transportiert. Damit sich der Rührkopf 31 während des Transports und im Einsatz nicht vom Spalttopf 50 lösen kann, steckt er vorzugsweise gefangen auf dem Lagerzapfen 51, wie dies in der Figur 8 angedeutet ist. Der Rührkopf 31 ist radial und axial beweglich mit gewünschtem Spiel gelagert. Im Ruhezustand liegt der Rührkopf 31 mit einer, der Unterseite der Rotorscheibe entsprechenden, Unterseite 42 des Lagerringes 40 auf einer, der Oberseite der Gegenscheibe entsprechenden, Gegenfläche 54 des Spalttopfes 50 auf. Ab Erreichen der Übergangsdrehzahl hebt der Rührkopf 31 wiederum vom Spalttopf ab, wobei die axiale Verschiebbeweglichkeit nach oben durch einen am oberen Ende der Achse 51 angeordneten Knopf 52 begrenzt ist. Ein radial umlaufender Wulst 53 verhindert dass der Rührkopf 31 beim Transport oder im Betrieb vom Lagerzapfen 51 fallen kann. Der Durchmesser des Knopfes 52 im Bereich des Wulstes 53 ist vorzugsweise gerade so viel grösser als der Innendurchmesser der zentralen Öffnung im Lagering 40, dass der Rührkopf 31 zwar sicher auf der Achse 51 gehalten ist, er sich aber bei der Fertigung einfach von oben über den Knopf 52 auf die Achse, respektive den Lagerzapfen 51 stossen lässt.

In weiteren, nicht in den Figuren dargestellten, Ausführungsformen sind Lagerring 40 und Achse 51 nicht einstückig gefertigt sondern umfassen eine separate Lagerschale, respektive einen separaten Lagerzapfen. Die hydrodynamisch aktiven Mitteln lassen sich beim Einweg-Rührer 30 im wesentlichen analog zu denen der vorgänging beschriebenen Rührer aus Metall gestalten, wobei die bevorzugte Spritzgussfertigung enorme Vorteile für die Herstellungskosten bringt.

Die Kunststoffbauteile der Rührer 30 für Einweggebinde sind vorzugsweise aus HDPE gefertigt, da sich dieses Material gut im Spritzguss verarbeiten lässt und mit der Gebindewand 70 verschweisst werden kann.

Die Motorentypen, die mit den erfindungsgemässen Rührern im Antrieb zum Einsatz kommen können sind aus dem Stand der Technik bekannt: Gleichstromantriebe, Wechselstromantriebe, bei Bedarf auch in explosions-geschützter Ausführung (ATEX), drehzahlgeregelte Motoren mit externem oder integriertem Frequenzumformer und pneumatische Antriebe, jeweils kombiniert mit einer geeigneten Getriebevariante Ein optionaler Schnellverschluss erlaubt eine einfache Demontage des Motors für den Fall, dass der Behälter im Autoklaven sterilisiert werden soll. In einer vorteilhaften Ausführungsform umfasst der Antrieb eine Absenkvorrichtung für die Antriebswelle mit dem treibenden Magneten 7. Besonders bei drehmomentstarken Rührwerken erleichtert diese auch bei starken Magnetfeldern den sicheren und einfachen Ausbau des Rührkopfes 2. Die übertragbaren Drehmomente liegen bei den erfindungsgemässen Rührern im Bereich von 30 Ncm bis 300Nm.

## Patentansprüche

1. Berührungslos, induktiv oder magnetisch antreibbarer Rührer (1, 30) für Fluide, insbesondere zum Rühren von sterilen Flüssigkeiten, mit einem Spalttopf (10, 50) und einem darauf axial und radial beweglich gelagerten Rührkopf (2, 31) zum Tragen von Rührorganen (5, 57) und mit Mitteln zur hydrodynamischen Erzeugung eines Fluidfilms aus dem zu rührenden Medium, **dadurch gekennzeichnet, dass** der Fluidfilm beim Betrieb zwischen mindestens einem stationären Anteil des Spalttopfes (10, 50) in Form einer Gegenscheibe (15) und mindestens einem, die hydrodynamisch aktiven Mittel tragenden, Anteil des rotationsbeweglichen Rührkopfes (2, 31) in Form einer Rotorscheibe (14) ausgebildet wird, wobei Gegenscheibe (15) und Rotorscheibe (14) jeweils an einem unteren Ende eines Lagerzapfens (9) beziehungsweise einer auf dem Lagerzapfen (9) aufgesteckten Lagerschale (8) senkrecht zur Lagerachse A sowie koaxial und koplanar angeordnet sind.

2. Rührer nach Anspruch 1, **dadurch gekennzeichnet, dass** die Rotorscheibe (14) an einer der Gegenscheibe (15) zugewandten Unterseite (16) mit hydrodynamisch wirksamen Strukturen, vorzugsweise Mikronuten (20-24) oder einem Wavy Face, versehen ist.

3. Rührer nach Anspruch 2, **dadurch gekennzeichnet, dass** die Nuten für den Betrieb in einer Drehrichtung aus der Gruppe: V-Nut, Spiral-Nut und für den Betrieb in beide Drehrichtungen aus der Gruppe: T-Nut, U-Nut, Tannenbaum-Nut ausgewählt sind.

4. Rührer nach einem der Ansprüche 2 oder 3, **dadurch gekennzeichnet, dass** die Höhe der Mikronuten nach innen hin abnimmt, wobei ein Neigungswinkel von 5 bis 10° bevorzugt und ein Neigungswinkel von 7° besonders bevorzugt ist.

5. Rührer nach Anspruch 1, **dadurch gekennzeichnet, dass** Lagerschale (8) und Rotorscheibe (14) sowie Lagerzapfen (9) und Gegenscheibe (15) jeweils einstückig hergestellt sind.

6. Rührer nach einem der vorhergehenden Ansprüche, **dadurch gekennzeichnet, dass** er ein im Wesentlichen aus Kunststoff gefertigter Einweg-Rührer (30) ist.

7. Rührer nach Anspruch 6, **dadurch gekennzeichnet, dass** der Rührkopf (31) auf dem Lagerzapfen (51) gefangen ist, so dass seine axiale Bewegbarkeit eingeschränkt ist.

## Claims

1. A contactlessly, inductively, or magnetically drivable agitator (1, 30) for fluids, in particular for agitating sterile fluids, comprising: a separating vessel (10, 50) and an agitator head (2, 31), which is supported thereon in an axially and radially movable fashion and is for supporting agitating elements (5, 57), wherein the agitator (1, 30) includes means for hydrodynamically generating a fluid film from the medium to be agitated **characterized in that** the fluid film is generated during operation between at least one stationary part of the separating vessel (10, 50) providing a counterpart disk (15) and at least one part of the rotationally movable agitator head (2, 31) that is equipped with the hydrodynamically acting means and providing a rotor disk (14), wherein counterpart disk (15) and rotor disk (14) are arranged at respective bottom ends of a bearing pin (9) and a bearing bushing (8) slid onto the bearing pin (9), perpendicular to the bearing axis A, coaxially and coplanar.

2. The agitator according to claim 1 wherein an underside (16) of the rotor disk (14), oriented toward the counterpart disk (15), is provided with hydrodynamically acting structures, preferably microgrooves (20-24) or a wavy face.

3. The agitator according to claim 2 wherein the microgrooves for operation in one rotation direction are selected from the group including V-grooves, spiral grooves and for operation in both rotation directions are selected from the group including T-grooves, U-grooves, Christmas tree-shaped grooves.

4. The agitator according to one of claims 2 or 3 wherein a height of the microgrooves decreases toward an inside preferably at an inclination angle of 5 to 10°, particularly preferably at an inclination angle of 7°.

5. The agitator according to claim 1 wherein the bearing bushing (8) and the rotor disk (14) and the bearing pin (9) and the counterpart disk (15), respectively, are each manufactured as one integral piece.

6. The agitator according to any of the proceeding claims designed as a one way agitator made predominantly of plastic.

7. The agitator according to claim 6 wherein the agitator head (31) is mounted on the bearing pin (51) in captive fashion, thus limiting its axial mobility.

## Revendications

1. Agitateur (1, 30) pouvant être entraîné sans contact, par induction ou de façon magnétique pour des fluides, en particulier pour remuer des liquides stériles, comprenant un pot à fente (10, 50) et un pot mélangeur (2, 31) logé de façon mobile dessus axialement et radialement pour porter des organes mélangeurs (5, 57) et des moyens pour la génération hydrodynamique d'un film de fluide à base du milieu à remuer, **caractérisé en ce que** le film de fluide est réalisé lors du fonctionnement entre au moins une fraction fixe du pot à fente (10, 50) sous la forme d'un contre-disque (15) et au moins une fraction, portant les moyens actifs au plan hydronynamique, de la tête mélangeuse (2, 31) mobile en rotation sous la forme d'un disque de rotor (14), le contre-disque (15) et le disque de rotor (14) étant disposés respectivement sur une extrémité inférieure d'un tourillon (9) ou d'une coquille de coussinet (8) emboîtée sur le tourillon (9) perpendiculairement à l'axe de palier A et de façon coaxiale et coplanaire.

2. Agitateur selon la revendication 1, **caractérisé en ce que** le disque de rotor (14) est doté sur un côté inférieur (16) tourné vers le contre-disque (15) de structures efficaces au plan hydrodynamique, de préférence de microrainures (20-24) ou d'un Wavy Face.

3. Agitateur selon la revendication 2, **caractérisé en ce que** les rainures pour le fonctionnement dans un sens de rotation sont choisies dans le groupe suivant : rainure en V, rainure hélicoïdale et pour le fonctionnement dans les deux sens de rotation dans le groupe suivant : rainure en T, rainure en U, rainure en arbre de noël.

4. Agitateur selon l'une quelconque des revendications 2 ou 3, **caractérisé en ce que** la hauteur des microrainures diminue en direction de l'intérieur, un angle d'inclinaison de 5 à 10° étant préféré et un angle d'inclinaison de 7° étant particulièrement préféré.

5. Agitateur selon la revendication 1, **caractérisé en ce que** la coquille de coussinet (8) et le disque de rotor (14) ainsi que le tourillon (9) et le contre-disque (15) sont fabriqués à chaque fois d'un seul tenant.

6. Agitateur selon l'une quelconque des revendications précédentes, **caractérisé en ce qu'**il s'agit d'un agitateur à usage unique (30) fabriqué principalement en matière synthétique.

7. Agitateur selon la revendication 6, **caractérisé en ce que** la tête mélangeuse (31) est réceptionnée sur le tourillon (51), de sorte que sa mobilité axiale est limitée.
